# EUROPÄISCHE PATENTSCHRIFT

(11) **EP 2 980 542 B1**
(45) Veröffentlichungstag und Bekanntmachung des Hinweises auf die Patenterteilung: **18.10.2017**
(21) Anmeldenummer: 15177456.9
(22) Anmeldetag: 20.07.2015
(51) Int. Cl.: G01G 23/01

(54) **WAAGE UND VERFAHREN ZUM BETRIEB EINER WAAGE**
SCALE AND METHOD FOR OPERATING A SCALE
BALANCE ET PROCEDE D'OPERATION D'UNE BALANCE

(30) Priorität: 30.07.2014 DE 102014110821
(43) Veröffentlichungstag der Anmeldung: 03.02.2016
(73) Patentinhaber: Bizerba SE & Co. KG, 72336 Balingen (DE)
(72) Erfinder: MÖSSMER, Harmy, 72393 Burladingen (DE)
(74) Vertreter: Louis Pöhlau Lohrentz

(56) Entgegenhaltungen:
- EP-A1- 0 911 618
- EP-A2- 1 450 144
- WO-A1-02/16891
- DE-A1-102012 016 653

## Beschreibung

Die Erfindung betrifft eine Waage zum Erfassen des Gewichts von Wägegut nach den Merkmalen des Oberbegriffs des Anspruchs 1.

In der Praxis ist es notwendig, beispielsweise bei einer Dosieranlage Gewichtswerte möglichst schnell und exakt zu erfassen. Zudem ist es notwendig, die erreichte Füllmenge eichtechnisch einwandfrei zu erfassen, um einen nach Gewicht abgefüllten oder abgepackten Artikel in den Verkehr zu bringen bzw. verkaufen zu können. In der Praxis werden dafür zwei separate Wägevorrichtungen verwendet.

Waagen mit einem Lastaufnehmer zum Erfassen eines Gewichts von Wägegut, die für einen Füllvorgang und/oder Dosiervorgang geeignet sind, sind aus der DE 28 25 049 A1 bekannt. Dort ist außerdem ein Eichgewicht vorgesehen, mit Hilfe dessen die Wägezelle geeicht werden kann. Die bei einer Wiegung ermittelten Daten werden von dieser Waage in einem Speicher eines Kleinrechners mit willkürlichem Zugriff abgespeichert und stehen maximal ein halbes Jahr zur Verfügung. Ein Manipulationsschutz von im Speicher gespeicherten Daten ist nicht vorgesehen. Diese Waage ist daher nicht geeignet, entsprechende Eichvorschriften, beispielsweise die Richtlinien der Fertigverpackungsverordnung in Deutschland zu erfüllen, da diese gezeigte Waage keine geeignete Waage im Sinne der Fertigverpackungsverordnung darstellt.

Dokument EP 0 911 618 A1 beschreibt eine Waage mit einem Lastaufnehmer, der dazu ausgebildet ist, das Gewichts von Wägegut zu erfassen, mit einer Auswertevorrichtung, die dazu ausgebildet ist, anhand des von dem Lastaufnehmer gemessenen Gewichtssignals einen Gewichtswert zu ermitteln, und mit einer Speichervorrichtung, die einen manipulationsgeschützten Speicher aufweist. Es ist vorgesehen ist, dass die Auswertevorrichtung in einen Eichmodus und einen Arbeitsmodus schaltbar ist. Der Arbeitsmodus entspricht dem normalen Wägebetrieb der Waage. Durch Eingabe eines Passworts wird die Waage vom Arbeitsmodus in den Eichmodus geschaltet. Im Eichmodus können eichrelevante Waagendaten geändert werden und in der Speichervorrichtung abgespeichert werden.

Dokument DE 10 2012 016 653 A1 beschreibt eine Vorrichtung mit einer Speichereinrichtung, einer Auswerteeinheit und einer Wägeeinheit. Die Wägeeinheit weist einen Identifikationsschlüssel auf; in der Speichereinrichtung ist ein Kennschlüssel gespeichert. Die Auswerteeinheit überprüft die Zusammengehörigkeit des in der Speichereinrichtung hinterlegten Kennschlüssels der Wägeeinheit und des Identifikationsschlüssels der aktuellen Wägeeinheit. Die Auswerteeinrichtung ermittelt einen positiven Prüfstatus, wenn die Zusammengehörigkeit des in der Speichereinrichtung hinterlegten Kennschlüssels und des Identifikationsschlüssels der aktuellen

Wägeeinheit festgestellt wird. Vorzugsweise wird wenigstens bei jedem Start der Vorrichtung überprüft, ob die bei der Kalibrierung vorhandene Wägeeinheit vorhanden ist. Falls ja, kann die Vorrichtung normal betrieben werden. Andernfalls wird wenigstens ein Wartungsbetrieb ermöglicht.

Dokument EP 1 450 144 A2 beschreibt ein Verfahren zur digitalen Sicherung von Messergebnissen mit einer Messvorrichtung, die eine Aufnehmervorrichtung und eine digitale Auswertevorrichtung enthält. Es für die Messvorrichtung ein korrespondierender öffentlicher und ein geheimer privater Schlüssel vorgesehen. Hierbei ist der private Schlüssel in der Auswertevorrichtung nicht auslesbar gespeichert. Mit Hilfe des privaten Schlüssels und eines vorgegebenen Signaturalgorithmus werden Messwerte oder der Messdatensatz signiert.

Eine im Warenverkauf eingesetzte Waage, insbesondere eine preisrechnende Waage, muss eichfähig und geeicht sein. Das bedeutet, dass die Waage Richtlinien oder gesetzliche Anforderungen erfüllen muss, die in einer Region oder in einem nationalen Land für eichfähige Waagen bestehen. Die Waage muss technisch so ausgebildet sein, dass die Waage jederzeit von einer Eichbehörde geprüft werden kann, ob die Waage den gesetzlichen Anforderungen genügt. Vor allem muss die Waage so ausgebildet sein, dass eine Manipulation eines Messergebnisses oder eines ermittelten Preises nicht möglich ist. Solche Richtlinien werden beispielsweise von der internationalen Organisation für das gesetzliche Messwesen (OIML), die ihren Sitz in Paris hat, erlassen.

Aufgabe der vorliegenden Erfindung ist es, eine Waage zu schaffen, die eichfähig ist und gleichzeitig eine hohe Wägeauflösung aufweist und beispielsweise als Dosierwaage oder Füllwaage einsetzbar ist. Erfindungsgemäß wird diese Aufgabe mit einer Waage nach den Merkmalen des Anspruchs 1 sowie einem Verfahren zum Betrieb einer Waage nach den Merkmalen des Anspruchs 11 gelöst.

Die erfindungsgemäße Waage zeichnet sich dadurch aus, dass eine Auswertevorrichtung in einen Eichmodus und einen Arbeitsmodus schaltbar ist, und die Auswertevorrichtung so ausgebildet ist, dass sie in dem Eichmodus einen Gewichtswert in einem manipulationsgeschützten Speicher abspeichert und in dem Arbeitsmodus kein Schreibzugriff und/oder kein Löschzugriff von der Auswertevorrichtung auf den manipulationsgeschützten Speicher möglich ist. Insbesondere ist vorgesehen, dass die Auswertevorrichtung und/oder der Speicher so ausgebildet ist bzw. sind, dass der manipulationsgeschützte Speicher gegen Zugriff, vorzugsweise Schreibzugriff und/oder Lesezugriff und/oder Löschzugriff von der nicht in den Eichmodus geschalteten Auswertevorrichtung geschützt ist.

Es ist vorgesehen, dass die Auswerteeinrichtung eine Umwandlung eines von dem Lastaufnehmer gelieferten Messsignales in einen Gewichtswert vornimmt. Weiter kann die Auswerteeinrichtung zur Erfassung, Speicherung und Auswertung eingegebener Daten, wie beispielsweise Auftragsdaten, Parameter und Zielgewicht, und gemessener Daten, wie beispielsweise das Gewicht eines Wägegutes, und zur Steuerung von Wägeprozessen ausgebildet sein. In dem Arbeitsmodus wird von der Auswertevorrichtung ein Gewichtswert eines Wägegutes schneller und/oder mit einer höheren Auflösung ermittelt als in dem Eichmodus. Der Eichmodus der Auswertevorrichtung dient der geeichten Erfassung des Gewichtswertes eines Wägegutes, die den geltenden gesetzlichen Vorschriften genügen muss. D.h., der ermittelte Gewichtswert, der zur Berechnung eines Preises dienen kann, muss vor Manipulationen geschützt werden und eine bestimmte gesetzlich vorgeschriebene Auflösung und Genauigkeit einhalten. Dies erfolgt bei der erfindungsgemäßen Waage dadurch, dass der Gewichtswert im Eichmodus in dem manipulationsgeschützten Speicher abgespeichert wird und im Arbeitsmodus die Auswertevorrichtung Vorzugsweise weist die Auswertevorrichtung Verschlüsselungsverfahren auf, um die Daten des manipulationsgeschützten Speichers zu schützen oder einen unberechtigten Zugriff zu verhindern. Alternativ oder ergänzend kann die Auswertevorrichtung auch über eine spezielle Formatierung der Daten oder des manipulationsgeschützten Speichers einen unberechtigten Zugriff verhindern. Auch kann die Auswertevorrichtung über Prüfsummen oder Redundanzcodes (CRC-Codes) basierend auf den im Eichmodus abgespeicherten Daten einen unberechtigten Zugriff auf den manipulationsgeschützten Speicher verhindern und/oder einen unberechtigten Zugriff auf den manipulationsgeschützten Speicher erkennen.

In einer Ausgestaltung kann vorgesehen sein, dass es die Auswertevorrichtung oder der manipulationsgeschützte Speicher nicht zulässt, außerhalb des Eichmodus gespeicherte Daten von dem manipulationsgeschützten Speicher auf andere Speichermedien zu kopieren oder mittels einer Anzeigevorrichtung zu visualisieren, beziehungsweise einen Lesezugriff auf den Speicher durchzuführen.

In einer Ausgestaltung kann die Auswertevorrichtung so ausgebildet sein, dass die Auswertevorrichtung einen unberechtigt erfolgten Schreibzugriff und/oder Löschzugriff auf den manipulationsgeschützten Speicher oder auf einzelne Daten des manipulationsgeschützten Speichers erkennt.

Weiterhin ist in einer Ausgestaltung vorgesehen, dass außerhalb des Eichmodus gespeicherte Daten in dem manipulationsgeschützten Speicher gelöscht werden können, auch Löschzugriff genannt, ohne dass dies von der Auswertevorrichtung erkannt wird.

Erfindungsgemäß wird weiter ein Verfahren zum Betrieb einer Waage, die einen Lastaufnehmer zum Erfassen des Gewichts von Wägegut aufweist, vorgeschlagen, wobei der Lastaufnehmer mit einer Auswertevorrichtung verbunden ist, mittels derer ein Gewichtswert anhand eines von dem Lastaufnehmer gemessenen Gewichtssignals ermittelt wird. Dabei dient der Lastenaufnehmer zur notwendigen Umformung der Gewichtskraft, die sich nicht direkt messen lässt, zum Beispiel in eine Verformung bzw. einen Weg in ein dementsprechendes kalibrierbares elektrisches Signal. Dieses wird beispielsweise über einen mit Dehnungsmessstreifen versehenen Biegebalken gelöst. In einer anderen Ausgestaltung kann der Lastaufnehmer auch als EMK-Lastaufnehmer, der nach dem Prinzip der elektromagnetischen Kraftkompensation arbeitet, oder als Saitenschwingzelle ausgebildet sein. Letztendlich ist der Lastaufnehmer ausgebildet, ein einem Gewichtswert eines Wägegutes entsprechendes elektrisches Signal auszugeben. Zwischen dem Gewichtswert und dem elektrischen Signal besteht ein eindeutiger funktionaler Zusammenhang. Beispielsweise kann das elektrische Signal des Lastaufnehmers proportional zu dem Gewichtswert sein oder im Falle einer nicht linearen Kennlinie des Lastaufnehmers auch in einem nicht linearen oder nicht proportionalen Zusammenhang stehen. Das elektrische Signal kann als Spannungssignal oder Stromsignal oder Frequenzsignal ausgebildet sein.

Die Waage kann vorzugsweise so gestaltet sein, dass die Waage im Arbeitsmodus für einen Füllvorgang und/oder Dosiervorgang verwendbar ist. Dabei kann die Waage durch vorherige Vorgabe eines Gewichtswerts als Zielgewicht, der in einem Speicher abgelegt ist, den Füllvorgang und/oder Dosiervorgang bei Erreichen dieses Gewichtswerts automatisch beenden oder das Ende des Füllvorgang und/oder Dosiervorgang anzeigen. Es kann auch vorgesehen sein, dass der Füllvorgang oder Dosiervorgang mehrere Komponenten oder Stoffe umfasst, die nacheinander abgefüllt oder dosiert werden. Das Zielgewicht setzt sich somit aus der Summe der Gewichte der einzelnen Komponenten oder Stoffe zusammen. Das Füllgewicht oder Zielgewicht wird in diesem Fall erst erreicht, nachdem alle Komponenten abgefüllt oder zugesetzt sind. Nach Feststellung des Erreichens des Zielgewichts kann dann die Auswerteeinrichtung der Waage in den Eichmodus entweder selbsttätig automatisch umschalten oder manuell oder gesteuert in den Eichmodus umgeschaltet werden. In dem Eichmodus kann die Auswerteeinrichtung das tatsächliche Gewicht des Wägeguts geeicht erfassen. Dieses im Eichmodus erfasste tatsächliche Gewicht kann aber auch als Basis für Arbeitsdaten dienen, die für nachfolgende Füllvorgänge und/oder Dosiervorgänge dienen, wie z. B. zur Abschaltpunktoptimierung bzw. Abschaltnachführung sowohl für die Waage als auch für die Steuerung verwendet werden.

Es kann insbesondere vorgesehen sein, dass der Eichmodus der Auswertevorrichtung ein Kontrollmodus im Sinne der Fertigverpackungsverordnung darstellt. Die Fertigverpackungsverordnung ist eine Vorschrift, die zumindest in Deutschland zur Anwendung kommt und bestimmt, dass die Füllmenge eines nach Gewicht gekennzeichneten Produktes überprüft und anhand geeigneter Mittel dokumentiert werden muss, z. B. OIML R87. Die Füllmenge der Produkte darf im Zeitpunkt der Herstellung im Mittel eine Nennfüllmenge nicht unterschreiten. Weiter darf eine gewisse negative Abweichung von der Nennfüllmenge im Einzelfall nicht unterschritten werden. Durch Vorgeben der Nennfüllmenge als Zielgewicht ist es möglich, die erfindungsgemäße Waage im Sinne der Fertigverpackungsverordnung einzusetzen.

Dieser Gewichtswert kann dann die Auswertevorrichtung einer je Wägevorgang individuell gestaltbaren Kennung zuordnen und in dem manipulationsgeschützten Speicher abspeichern.

Der Füllvorgang und/oder Dosiervorgang im Arbeitsmodus und die geeichte Gewichtskontrolle im Eichmodus können unter Verwendung ein und desselben Zielgewichts nacheinander beliebig oft erfolgen. Alternativ können auch unterschiedliche Zielgewichte verwendet werden. Dieser Algorithmus folgt dem erfindungsgemäßen Verfahren zum Betrieb einer Waage.

Es kann vorgesehen sein, dass die Auswertevorrichtung den Gewichtswert auf einer Anzeigevorrichtung anzeigt, wobei in dem Eichmodus die Auswertevorrichtung den Gewichtswert auf der Anzeigevorrichtung zusammen mit einer den Eichmodus kennzeichnenden Kennung anzeigt. Alternativ kann in dem Arbeitsmodus die Auswertevorrichtung den Gewichtswert auf der Anzeigevorrichtung zusammen mit einer eine nicht eichfähige Wiegung kennzeichnenden Kennung anzeigen. Dabei kann die Anzeigevorrichtung beispielsweise ein Monitor oder ein Touchscreen-Display sein.

Es kann auch vorgesehen sein, dass die Auswertevorrichtung mit einer Schnittstellenvorrichtung zum Ausgeben von Gewichtswerten verbunden ist oder eine Schnittstellenvorrichtung zum Ausgeben von Gewichtswerten aufweist. Die Auswertevorrichtung kann in dem Eichmodus über eine Schnittstelle der Schnittstellenvorrichtung einen Drucker, vorzugsweise einen Etikettierer und/oder Etikettendrucker, ansteuern, und/oder die Auswertevorrichtung kann in dem Arbeitsmodus über eine Schnittstelle der Schnittstellenvorrichtung eine Dosiervorrichtung, vorzugsweise eine Abfüllvorrichtung, ansteuern. Dabei enthält die Schnittstellenvorrichtung entweder mehrere Schnittstellen, die zum Beispiel als Ein-/Ausgabevorrichtungen und/oder nur Ausgabevorrichtungen von Daten zu und von der Auswertevorrichtung ausgebildet sind, oder die Schnittstellenvorrichtung weist eine einzige Schnittstelle auf, an die mehrere Geräte, insbesondere Drucker und/oder Dosiervorrichtungen anschließbar sind.

Es kann weiterhin vorgesehen sein, dass die Auswertevorrichtung so ausgebildet ist, dass sie in dem Arbeitsmodus einen Gewichtswert schneller und/oder mit einer höheren Auflösung ermittelt als in dem Eichmodus. Das kann beispielsweise dadurch erreicht werden, dass die Ansteuerung eines A/D-Wandlers für eine digitale Umsetzung des vom Lastaufnehmer ausgegebenen Signals verändert wird. Alternativ oder ergänzend kann die Auswerteeinrichtung im Eichmodus auch eine gegenüber dem Arbeitsmodus veränderte Auswertung des vom Lastaufnehmer ausgegebenen Signals vornehmen. Vorzugsweise kann die Auswerteeinrichtung mehrere Filter zur Signalverarbeitung des von dem Lastaufnehmer gelieferten Messignales aufweisen, und diese Filter zwischen dem Eichmodus und dem Arbeitsmodus umschalten und/oder austauschen. Diese Filter können als Digital- oder Analogfilter ausgebildet sein.

Es kann des Weiteren vorgesehen sein, dass der manipulationsgeschützte Speicher als austauschbarer Wechselspeicher, vorzugsweise als SD-Karte oder USB-Stick ausgebildet ist.

Um einen guten Manipulationsschutz eines elektrisch beschreibbaren und auslesbaren Speichers, vorzugsweise Wechselspeichers, zu erreichen, ist in einer Ausgestaltung vorgesehen, den elektrisch beschreibbaren und auslesbaren Speicher als Wechselspeicher auszubilden und diesen zu verplomben. Alternativ kann die Auswerteeinrichtung die in dem Speicher gesicherten Daten auf eine spezielle Art und Weise formatieren. Ebenso kann die Auswerteeinrichtung den manipulationssicheren Speicher kodieren bzw. die darin gespeicherten Daten verschlüsseln. Weiter kann die Auswerteeinrichtung die Daten in dem manipulationssicheren Speicher mit einer oder mehreren Prüfsummen und/oder Hash-Codes und/oder CRC-Codes gegen eine Manipulation absichern. Eine Kombination von einem oder mehreren der vorgenannten Sicherungsmechanismen erhöht den wirksamen Manipulationsschutz.

Es kann vorgesehen sein, dass der manipulationsgeschützte Speicher als ein abgesicherter Speicherbereich in einem elektronisch wiederbeschreibbaren Speicher, beispielsweise in einem handelsüblichen RAM-Speicherbaustein (RAM bedeutet Random-Access Memory), ausgebildet ist. Der elektronisch wiederbeschreibbare Speicher weist zusätzlich zu dem abgesicherten Speicherbereich zumindest noch einen weiteren Speicherbereich auf. In dem weiteren Speicherbereich können beispielsweise allgemeine Daten oder Programme abgelegt sein oder einen Arbeitsspeicher für einen Mikroprozessor bilden. Ein so ausgebildeter Speicher kann als fest in die Auswerteeinrichtung integrierter Speicherbaustein ausgebildet sein. Beispielsweise kann der Speicherbaustein auch als austauschbarer Speicherbaustein ausgebildet sein, wie beispielsweise eine SD-Karte oder ein USB-Stick, der die drei vorgenannten Speicherbereiche enthält.

Es ist jedoch auch möglich, die Speicherbereiche physikalisch voneinander zu trennen, indem der manipulationsgeschützte Speicher als separater Speicherbaustein ausgebildet ist und ausschließlich den abgesicherten Speicherbereich enthält. Dieser kann beispielsweise als austauschbarer Wechselspeicher ausgebildet sein.

Es kann auch vorgesehen sein, dass die Auswertevorrichtung ein Statistikmodul zum Ermitteln von Statistikdaten anhand von Gewichtswerten aufweist und das Statistikmodul die ermittelten Statistikdaten in dem manipulationsgeschützten Speicher ablegt. Die von dem Statistikmodul ermittelten Statistikdaten umfassen solche Daten, die für einen Eichvorgang notwendig bzw. vorgeschrieben sind. Zusätzlich können die Statistikdaten weitere Daten umfassen, die zur Auftragsbearbeitung dienen oder in darauffolgenden Prozessschritten benötigt werden. Die vom Statistikmodul ermittelten Statistikdaten sind aber nicht nur die sogenannten Eichdaten, sondern auch die Arbeitsdaten für die nachfolgenden Arbeitsmodule.

Das Statistikmodul kann beispielsweise als Softwareroutine, insbesondere als in einer Auswerte- und Steuersoftware implementierter Programmteil ausgebildet sein. Alternativ kann das Statistikmodul beispielsweise als Hardwarekomponente ausgebildet sein, insbesondere als austauschbare Baugruppe oder als fest verdrahtete Hardwarekomponente in der Auswertevorrichtung ausgebildet sein.

Es kann weiterhin vorgesehen sein, dass das Statistikmodul so ausgebildet ist, dass es beim Schalten der Auswertevorrichtung von dem Eichmodus in den Arbeitsmodus eine eindeutige Statistikkennung erzeugt und diese in dem manipulationsgeschützten Speicher in Zusammenhang mit den Statistikdaten abspeichert.

Statistikdaten und daraus erzeugbare einem Wägegut eindeutig zuordenbare Statistikkennungen sind dabei solche Daten, die entsprechend geltender nationaler und internationaler Vorschriften im Rahmen von Eichvorgängen bei Waagen erhoben und manipulationssicher gespeichert werden müssen.

Es kann des Weiteren vorgesehen sein, dass das Statistikmodul so ausgebildet ist, dass es beim Schalten der Auswertevorrichtung von dem Arbeitsmodus in den Eichmodus eine gespeicherte Statistikkennung aus dem manipulationsgeschützten Speicher ausliest und auf Plausibilität prüft und nur nach positiver Prüfung den in dem manipulationsgeschützten Speicher bereits gespeicherten Statistikdaten weitere Statistikdaten hinzufügt.

Weiter kann vorgesehen sein, dass das Statistikmodul so ausgebildet ist, dass es auf Basis der ermittelten Gewichtswerte, insbesondere es auf Basis der im Eichmodus ermittelten Gewichtswerte, eine Optimierung eines Dosierprozesses oder Füllprozesses vornimmt. Beispielsweise kann das Statistikmodul einen Abschaltpunkt einer Füll- und/oder Dosieranlage steuern oder den Abschaltpunkt neu festlegen, um eine gewünschte Füllmenge oder Dosiermenge exakt einzuhalten.

Weitere vorteilhafte Ausführungen ergeben sich durch spezielle konstruktive Ausgestaltungen der Waage.

Die Waage kann in einer Ausgestaltung mit einem mit dem Lastaufnehmer verbundenen Wägeband und mit einem angetriebenen Zuführband und vorzugsweise mit einem angetriebenen Abführband ausgestattet sein. Weiter kann eine Steuerungsvorrichtung vorgesehen sein, die das Zuführband und/oder das Wägeband und vorzugsweise das Abführband steuert, um Wägegut zu transportieren.

Weiterhin kann die Waage mit einer Ausschleusevorrichtung und/oder einer Kennzeichnungsvorrichtung ausgestattet sein, die sich dadurch auszeichnet, dass die Auswerteeinrichtung im Eichmodus die Ausschleusevorrichtung und/oder die Kennzeichnungsvorrichtung ansteuert, um fehlerhaftes Wägegut, also Wägegut mit einem zu geringen oder zu hohen Gewicht, zu kennzeichnen und/oder auszuschleusen. Eine solche Kennzeichnungsvorrichtung kann ein automatisch gesteuertes Etikettiersystem, zum Beispiel ein Etikettierer und/oder ein Etikettendrucker, sein. Eine Ausschleusevorrichtung kann beispielsweise einen Pusher aufweisen, der fehlerhaftes Wägegut von dem Förderband und damit aus dem regulären Warenstrom entfernt.

Das Verfahren zum Betrieb einer Waage zeichnet sich dadurch aus, dass die Auswertevorrichtung für einen Füllvorgang und/oder für einen Dosiervorgang in einen Arbeitsmodus zur Gewichtskontrolle während des Füllvorganges und/oder Dosiervorganges geschaltet wird und nach Abschluss des Füllvorganges und/oder Dosiervorganges in einen Eichmodus zur Erfassung eines eichfähigen Gewichtswertes geschaltet wird.

Dabei ermöglicht das vorgeschlagene Verfahren eine Speicherung des erfassten eichfähigen Gewichtswertes in einen manipulationsgeschützten Speicher, wenn sich die Waage in dem Eichmodus befindet.

Es kann vorgesehen sein, dass in dem Arbeitsmodus der Auswertevorrichtung das aktuelle Gewicht des Wägeguts und das Zielgewicht des Wägeguts und vorzugsweise eine Differenz zwischen dem aktuellen Gewicht und dem Zielgewicht auf einer Anzeigevorrichtung angezeigt wird und/oder über eine Schnittstelle ausgegeben wird.

Weiter kann vorgesehen sein, dass neue Auftragsparameter und/oder neue Auftragsdaten in dem Eichmodus der Auswertevorrichtung zum Anlegen eines neuen Wiegeauftrags eingegeben werden und anhand dieser Auftragsparameter und/oder Auftragsdaten eine neue Statistik angelegt und in einem manipulationsgeschützten Speicher abgespeichert wird und anschließend die Auswertevorrichtung in den Arbeitsmodus geschaltet wird.

In einer weiteren vorteilhaften Ausbildung kann vorgesehen sein, dass nach dem Abschluss eines Füllvorganges oder Dosiervorganges die Auswertevorrichtung von dem Arbeitsmodus in den Eichmodus geschaltet wird und ein eichfähiger Gewichtswert ermittelt und abgespeichert wird, ohne dass ein zuvor in dem Arbeitsmodus ermittelter Gewichtswert oder ein zuvor im Arbeitsmodus ermitteltes Gewichtssignal für die Ermittlung des eichfähigen Gewichtswerts verwendet wird.

Eine Anwendung der Waage kann beispielsweise in der Lebensmittelindustrie zum Abfüllen oder Dosieren von Lebensmittel oder in der chemischen Industrie zum Abfüllen oder Dosieren von Chemikalien eingesetzt werden.

Die Erfindung wird nun anhand von Ausführungsbeispielen näher erläutert. Es zeigen:
- Fig. 1: Schematische Darstellung einer erfindungsgemäßen Waage,
- Fig. 2: Prozessablauf eines Füllvorgangs und/oder Dosiervorgangs und einer sich daran anschließenden Gewichtskontrolle gemäß der vorliegenden Erfindung.

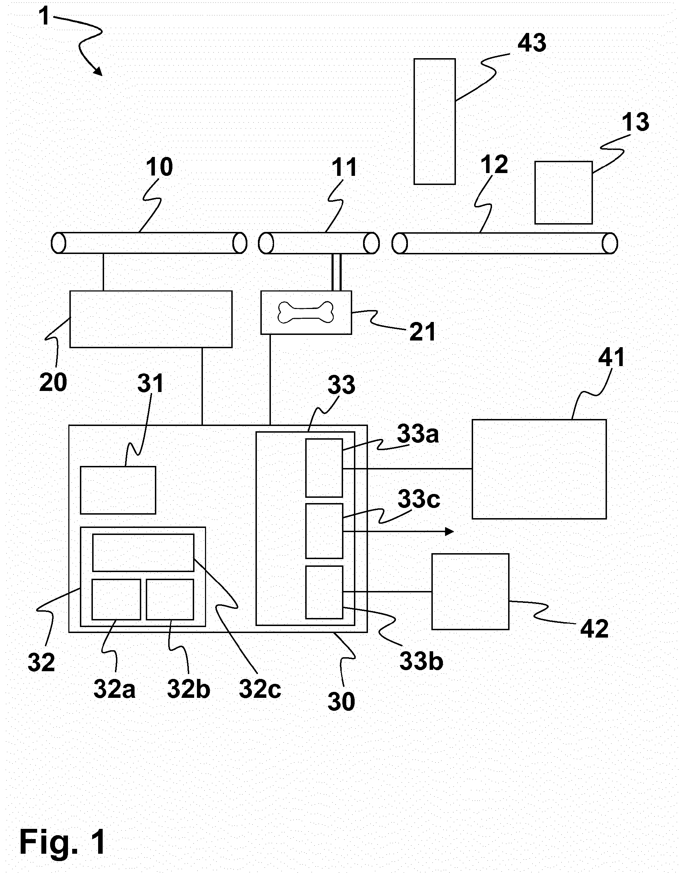

Figur 1 zeigt eine schematische Darstellung einer erfindungsgemäßen Waage 1, die mit auf einer Ebene befindlichen nacheinander angeordneten Fördermittel für Wägegut, die jeweils als Förderbänder ausgebildet ist. Die Förderbänder sind als ein Zuführband 10, ein Wägeband 11, ein Abführband 12 und eine Ausschleusevorrichtung 13, auch Pusher genannt, ausgebildet.

Eine Steuervorrichtung 20 ist mit dem Zuführband 10, dem Wägeband 11, dem Abführband 12 und der Ausschleusevorrichtung 13 verbunden und steuert diese. Die Steuerungsvorrichtung 20 weist eine Lichtschranke auf, um die Steuerung des Zuführbandes 10, des Wägebandes 11, des Abführbandes 12 und der Ausschleusevorrichtung 13 zu erreichen. Das Wägeband 11 ist mit einem Lastaufnehmer 21 verbunden, der zu einem auf dem Wägeband 11 befindlichen Wägegut ein dem momentanen Gewicht des Wägeguts entsprechendes z. B. proportionales elektrisches Signal ausgibt. Die Steuerungsvorrichtung 20 und der Lastaufnehmer 21 wiederum sind mit einer mikroprozessorgesteuerten Auswertevorrichtung 30 verbunden, die mindestens einen Mikroprozessor (CPU) enthält, wobei die Steuerungsvorrichtung 20 von der Auswertevorrichtung 30 Steuersignale empfängt und Statussignale an die Auswertevorrichtung 30 sendet.

Die Auswertevorrichtung 30 enthält weiterhin ein Statistikmodul 31, eine Speichervorrichtung 32 und eine Schnittstellenvorrichtung 33. Die Speichervorrichtung 32 wiederum enthält einen manipulationsgeschützten Speicher 32a, einen elektronisch wiederbeschreibbaren Speicher 32b und einen weiteren allgemeinen Speicherbereich 32c.

Dabei ist der manipulationsgeschützte Speicher 32a so geschützt, dass beispielsweise während eines Füllvorganges oder Dosiervorganges, oder wenn sich die Waage im Arbeitsmodus befindet, kein Zugriff auf den manipulationsgeschützten Speicher 32a erfolgen kann.

In dem Arbeitsmodus der Auswerteeinrichtung 30 kann diese einen Gewichtswert eines Wägegutes schneller und/oder mit einer höheren Auflösung ermitteln als im Eichmodus. Der Eichmodus dagegen dient der geeichten Erfassung des Gewichtswertes eines Wägegutes, die den geltenden gesetzlichen Vorschriften genügen muss, d. h., der ermittelte Gewichtswert, der zur Berechnung eines Preises dienen kann, muss vor Manipulationen geschützt erfasst werden.

Mittels der Schnittstellenvorrichtung 33, die mehrere Schnittstellen aufweist, ist die Auswertevorrichtung 30 in der Lage, über eine erste Schnittstelle, eine Ein-/Ausgabevorrichtung 33a, von/an eine Bedien- und Anzeigevorrichtung 41, die als Touchscreen-Display ausgebildet ist, durch manuelle Eingabe Auftragsdaten und Parameter zu geplanten Wägevorgängen zu erhalten und den jeweils aktuellen Wägevorgang mit seinen Prozessschritten zu visualisieren.

Über eine zweite Schnittstelle 33b der Schnittstellenvorrichtung 33 ist ein Drucker 42 ansteuerbar. Beispielsweise ist über den Drucker die Ausgabe eines Protokolls von bisher durchgeführten Wägevorgängen möglich.

Eine dritte Schnittstelle 33c der Schnittstellenvorrichtung 33, die drahtgebunden, z. B. LAN, oder drahtlos, z. B. WLAN, Bluetooth, u. a., ausgebildet sein kann, gestattet die Ausgabe von Steuersignalen an den Etikettierer und/oder Etikettendrucker 43. Der Etikettierer 43 kann anhand der Steuersignale ein Etikett zum Etikettieren von Wägegut erstellen und/oder auf dem Wägegut applizieren. Weiter kann über die Schnittstellenvorrichtung 30 eine Dosierungsvorrichtung oder Abfüllvorrichtung von der Auswertevorrichtung 30 angesteuert werden. Es ist auch möglich, Auftragsdaten und Parameter über die dritte Schnittstelle 33c von einem zentralen Rechner, vorzugsweise einem Host, abzurufen bzw. zu laden.

In dem allgemeinen Speicherbereich 32c ist ein Programm zur Steuerung der Waage 1 gespeichert. Weiter sind in dem allgemeinen Speicherbereich 32c Daten wie zum Beispiel Auftragsdaten und Parameter hinterlegt, die beispielsweise über die Bedien- und Anzeigevorrichtung 41 manuell eingegeben werden. Das Steuerprogramm stellt ein von einem Mikroprozessor lesbares und ausführbares Programm dar, das als Software in dem Speicher 32c abgespeichert ist.

Der elektronisch wiederbeschreibbare Speicher 32b fungiert dabei als Arbeitsspeicher für die Auswertevorrichtung.

Die Auswertevorrichtung 30 steuert in dem Arbeitsmodus die Dosierungsvorrichtung oder Abfüllvorrichtung dahingehend, indem es einen Füllvorgang startet und ihn nach Erreichen des Zielgewichts stoppt.

Das Stoppen des Füllvorgangs geschieht durch Abgabe eines Steuersignals zur Beendigung eines Füllvorganges oder durch eine Anzeige, die einen Bediener dazu veranlasst, den Füllvorgang zu beenden.

Nach dem Kontrollwiegen erfolgt im Eichmodus der Auswerteeinrichtung 30 mittels des Statistikmoduls 31 die Generierung von Statistikdaten anhand des erfassten Gewichtswerts. Bei dem Umschalten von dem Arbeitsmodus in den Eichmodus erfasst die Auswertevorrichtung die Gewichtssignale neu. Das bedeutet, dass kein zuvor im Arbeitsmodus erfasster Gewichtswert von der Auswertevorrichtung im Eichmodus verwendet und/oder ausgewertet wird.

Auf dem Zuführband 10 erfolgt ein Transport von Wägegut. Dabei erfolgt eine Steuerung des Transports über eine Lichtschranke.

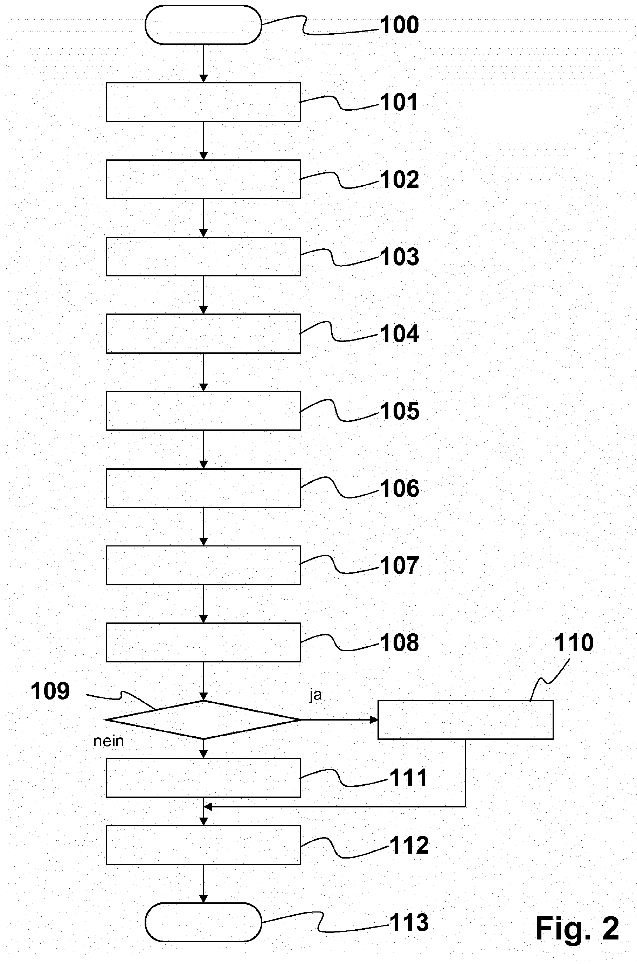

In Figur 2 ist beispielhaft ein Prozessablauf eines Füllvorgangs und/oder Dosiervorgangs und einer sich daran anschließenden Gewichtskontrolle beschrieben. Mit der Inbetriebnahme der Waage 1 erfolgt gleichzeitig der Start 100 des Wägevorgangs. Dem schließt sich eine Dateneingabe 101 an. Dabei kann die Dateneingabe entweder manuell über die Bedien- und Anzeigevorrichtung 41 oder über das Aktivieren von bereits in der Speichervorrichtung 32 gespeicherten Daten erfolgen. Solche Daten können Auftragsdaten, Parameter und das jeweilige Zielgewicht sein. In Vorbereitung des Wägens werden die Daten entsprechend den Vorgaben der geltenden gesetzlichen Vorschriften konfiguriert, die als Statistik bezeichnet wird. Dazu erfolgt der Start der Statistik 102 je Wägevorgang. Im Rahmen der Datenkonfiguration erfolgt in Abhängigkeit der zu verarbeitenden Daten die Festlegung des Ablaufalgorithmus für den Füll- oder Dosiervorgang 103. Im Anschluss daran wird die Statistik unterbrochen 104, die Auswertevorrichtung 30 in den Arbeitsmodus umgeschaltet und der Füll- oder Dosiervorgang gestartet 105. Das Füllen oder Dosieren 106 wird dann solange durchgeführt, bis das Wägegut gemäß einem Auftrag das vorgegebene Zielgewicht erreicht hat. Damit wird der Füll- oder Dosiervorgang beendet 107. Danach schaltet die Auswertevorrichtung 30 in den Eichmodus, um einen geeichten Gewichtswert zu erfassen. Die unterbrochene Statistik wird mit diesem neu erfassten Gewichtswert fortgesetzt 108.

Diesem Schritt schließt sich die Anfrage an, ob der in der derzeitigen noch nicht abgeschlossenen Statistik bearbeitete Auftrag beendet werden soll 109. Können alle gesetzlich vorgeschriebenen Vorgaben gemäß den in der Statistik konfigurierten Daten einschließlich des Erreichens des Zielgewichts bestätigt werden, dann wird die Anfrage bejaht, und die Statistik wird beendet 110. Dabei erfolgt eine Abspeicherung der Statistik in dem manipulationsgeschützten Speicher 32a und eine Datenausgabe an den Etikettierer und/oder Etikettendrucker 43 zur Kennzeichnung des Wägeguts. Dem schließen sich die Prozessschritte Beendigung des Auftrages 112 und dann das Ende 113 des Prozessablaufs des Füllvorgangs und/oder Dosiervorgangs an.

Stimmen jedoch nicht alle gesetzlich vorgeschriebenen Vorgaben gemäß den in der Statistik konfigurierten Daten bzw. das Zielgewicht mit dem gewogenen Wägegut überein, dann wird die Anfrage verneint. In dem dann folgenden Prozessschritt Nachdosieren und Beenden der Statistik 111 erfolgt bei Bedarf ein Nachdosieren des Wägeguts zum Erreichen des Zielgewichts. Dann wird im Eichmodus der geeichte Gewichtswert ermittelt und die Statistik beendet. Dabei erfolgt in jedem Fall eine Abspeicherung der Statistik in dem manipulationsgeschützten Speicher 32a und eine Datenausgabe an den Etikettierer und/oder Etikettendrucker 43 zur Kennzeichnung des Wägeguts. Sofern das Wägegut als fehlerhaft gekennzeichnet ist, wird es im Anschluss daran mittels der Ausschleusevorrichtung 13 separiert. Dem schließen sich dann ebenfalls die Prozessschritte Beendigung des Auftrages 112 und dann das Ende 113 des Prozessablauf des Füllvorgangs und/oder Dosiervorgangs an.

### Bezugszeichenliste

- 1: Waage
- 10: Zuführband
- 11: Wägeband
- 12: Abführband
- 13: Ausschleusevorrichtung/Pusher
- 20: Steuerungsvorrichtung
- 21: Lastaufnehmer
- 30: Auswertevorrichtung
- 31: Statistikmodul
- 32: Speichervorrichtung
- 32a: manipulationsgeschützter Speicher
- 32b: elektronisch wiederbeschreibbarer Speicher
- 32c: allgemeiner Speicherbereich
- 33: Schnittstellenvorrichtung
- 33a: Ein-/Ausgabevorrichtung
- 33b: Ausgabevorrichtung
- 33c: Ausgabevorrichtung
- 41: Bedien- und Anzeigevorrichtung
- 42: Drucker
- 43: Etikettierer und/oder Etikettendrucker
- 100: Start des Prozessablaufes eines Füll- oder Dosiervorgangs
- 101: Dateneingabe
- 102: Start der Statistik
- 103: Festlegung des Ablaufalgorithmus für den Füll- oder Dosiervorgang
- 104: Unterbrechung der Statistik
- 105: Start des Dosiervorgangs
- 106: Füllen oder Dosieren
- 107: Beendigung des Füll- oder Dosiervorgangs
- 108: Fortsetzen der unterbrochenen Statistik
- 109: Anfrage, ob der Auftrag beendet werden soll
- 110: Beenden der Statistik
- 111: Nachdosieren und Beenden der Statistik
- 112: Beendigung des Auftrages
- 113: Ende des Prozessablaufes eines Füll- oder Dosiervorgangs

## Patentansprüche

1. Waage mit einem Lastaufnehmer (21), der dazu ausgebildet ist, das Gewichts von Wägegut zu erfassen, und mit einer mit dem Lastaufnehmer (21) verbunden Auswertevorrichtung (30), die dazu ausgebildet ist, anhand des von dem Lastaufnehmer (21) gemessenen Gewichtssignals einen Gewichtswert zu ermitteln, und
mit einer Speichervorrichtung (32), die einen manipulationsgeschützten Speicher (32a) aufweist,
wobei vorgesehen ist, dass die Auswertevorrichtung (30) in einen Eichmodus und einen Arbeitsmodus schaltbar ist,
**dadurch gekennzeichnet,**
**dass** die Auswertevorrichtung (30) so ausgebildet ist, dass sie in dem Eichmodus einen Gewichtswert in dem manipulationsgeschützten Speicher (32a) abspeichert und in dem Arbeitsmodus kein Schreibzugriff und/oder kein Löschzugriff von der Auswertevorrichtung (30) auf den manipulationsgeschützten Speicher (32a) möglich ist, und
**dass** die Auswertevorrichtung (30) so ausgebildet ist, dass sie in dem Arbeitsmodus einen Gewichtswert schneller und/oder mit einer höheren Auflösung ermittelt als in dem Eichmodus.

2. Waage nach Anspruch 1,
**dadurch gekennzeichnet,**
**dass** die Auswertevorrichtung (30) den Gewichtswert auf einer Bedien-und Anzeigevorrichtung (41) anzeigt, wobei in dem Eichmodus die Auswertevorrichtung (30) den Gewichtswert auf der Bedien- und Anzeigevorrichtung (41) zusammen mit einer den Eichmodus kennzeichnenden Kennung anzeigt, oder wobei in dem Arbeitsmodus die Auswertevorrichtung (30) den Gewichtswert auf der Bedien- und Anzeigevorrichtung (41) zusammen mit einer eine nicht eichfähige Wiegung kennzeichnenden Kennung anzeigt.

3. Waage nach Anspruch 1 oder 2,
**dadurch gekennzeichnet,**
**dass** die Auswertevorrichtung (30) mit einer Schnittstellenvorrichtung (33) zum Ausgeben von Gewichtswerten verbunden ist oder eine Schnittstellenvorrichtung (33) zum Ausgeben von Gewichtswerten aufweist, und die Auswertevorrichtung (30) in dem Eichmodus über eine Ausgabevorrichtung (33b) der Schnittstellenvorrichtung (33) einen Drucker, vorzugsweise einen Etikettierer mit Etikettendrucker (43), ansteuert, und/oder die Auswertevorrichtung (30) in dem Arbeitsmodus über eine Ausgabevorrichtung (33b) der Schnittstellenvorrichtung (33) eine Dosiervorrichtung, vorzugsweise eine Abfüllvorrichtung, ansteuert.

4. Waage nach einem der vorhergehenden Ansprüche,
**dadurch gekennzeichnet,**
**dass** der manipulationsgeschützte Speicher (32a) als austauschbarer Wechselspeicher, vorzugsweise als SD-Karte oder USB-Stick ausgebildet ist.

5. Waage nach einem der Ansprüche 1 bis 3,
**dadurch gekennzeichnet,**
**dass** der manipulationsgeschützte Speicher (32a) als ein abgesicherter Speicherbereich in einem elektronisch wiederbeschreibbaren Speicher (32b) ausgebildet ist, und vorzugsweise vorgesehen ist, dass der elektronisch wiederbeschreibbare Speicher (32b) zusätzlich zu dem abgesicherten Speicherbereich zumindest noch einen weiteren Speicherbereich (32c) aufweist.

6. Waage nach einem der vorhergehenden Ansprüche,
**dadurch gekennzeichnet,**
**dass** die Auswertevorrichtung (30) ein Statistikmodul (31) zum Ermitteln von Statistikdaten anhand von Gewichtswerten aufweist und das Statistikmodul (31) die ermittelten Statistikdaten in dem manipulationsgeschützten Speicher (32a) ablegt.

7. Waage nach Anspruch 6,
**dadurch gekennzeichnet,**
**dass** das Statistikmodul (31) so ausgebildet ist, dass es beim Schalten der Auswertevorrichtung (30) von dem Eichmodus in den Arbeitsmodus eine eindeutige Statistikkennung erzeugt und diese in dem manipulationsgeschützten Speicher (32a) in Zusammenhang mit den Statistikdaten abspeichert.

8. Waage nach Anspruch 6 oder 7,
**dadurch gekennzeichnet,**
**dass** das Statistikmodul (31) so ausgebildet ist, dass es beim Schalten der Auswertevorrichtung (30) von dem Arbeitsmodus in den Eichmodus eine gespeicherte Statistikkennung aus dem manipulationsgeschützten Speicher (32a) ausliest und auf Plausibilität prüft und nur nach positiver Prüfung den in dem manipulationsgeschützten Speicher (32a) bereits gespeicherten Statistikdaten weitere Statistikdaten hinzufügt.

9. Waage nach einem der vorhergehenden Ansprüche,
mit einem mit dem Lastaufnehmer (21) verbundenen Wägeband (11) und mit einem angetriebenen Zuführband (10) und vorzugsweise mit einem angetriebenen Abführband (12),
**dadurch gekennzeichnet,**
**dass** eine Steuerungsvorrichtung (20) vorgesehen ist, die das Zuführband (10) und/oder das Wägeband (11) und vorzugsweise das Abführband (12) steuert, um Wägegut zu transportieren.

10. Waage nach einem der vorhergehenden Ansprüche,
mit einer Ausschleusevorrichtung (13) und/oder einer Kennzeichnungsvorrichtung,
**dadurch gekennzeichnet,**
**dass** die Auswerteeinrichtung (30) im Eichmodus die Ausschleusevorrichtung (13) und/oder die Kennzeichnungsvorrichtung (43) ansteuert, um fehlerhaftes Wägegut zu kennzeichnen und/oder auszuschleusen.

11. Verfahren zum Betrieb einer Waage, die einen Lastaufnehmer (21) zum Erfassen des Gewichts von Wägegut aufweist, wobei der Lastaufnehmer (21) mit einer Auswertevorrichtung (30) verbunden ist, mittels derer ein Gewichtswert anhand eines von dem Lastaufnehmer (21) gemessenen Gewichtssignals ermittelt wird,
**dadurch gekennzeichnet,**
**dass** die Auswertevorrichtung (30) für einen Füllvorgang und/oder für einen Dosiervorgang in einen Arbeitsmodus zur Gewichtskontrolle während des Füllvorganges und/oder Dosiervorganges geschaltet wird und nach Abschluss des Füllvorganges und/oder Dosiervorganges in einen Eichmodus zur Erfassung eines eichfähigen Gewichtswertes geschaltet wird, wobei die Auswertevorrichtung (30) so ausgebildet ist, dass sie in dem Arbeitsmodus einen Gewichtswert schneller und/oder mit einer höheren Auflösung ermittelt als in dem Eichmodus.

12. Verfahren nach Anspruch 11,
**dadurch gekennzeichnet,**
**dass** in dem Arbeitsmodus der Auswertevorrichtung (30) das aktuelle Gewicht des Wägeguts und das Zielgewicht des Wägeguts und vorzugsweise eine Differenz zwischen dem aktuellen Gewicht und dem Zielgewicht auf einer Anzeigevorrichtung angezeigt wird und/oder über eine Schnittstelle ausgegeben wird.

13. Verfahren nach Anspruch 11 oder 12,
**dadurch gekennzeichnet,**
**dass** neue Auftragsparameter und/oder neue Auftragsdaten in dem Eichmodus der Auswertevorrichtung (30) zum Anlegen eines neuen Wiegeauftrags eingegeben werden und anhand dieser Auftragsparameter und/oder Auftragsdaten eine neue Statistik angelegt und in einem manipulationsgeschützten Speicher (32a) abgespeichert wird und anschließend die Auswertevorrichtung (30) in den Arbeitsmodus geschaltet wird.

14. Verfahren nach einem der Ansprüche 11 bis 13,
**dadurch gekennzeichnet,**
**dass** nach dem Abschluss eines Füllvorgangs oder Dosiervorganges die Auswertevorrichtung (30) von dem Arbeitsmodus in den Eichmodus geschaltet wird und ein eichfähiger Gewichtswert ermittelt und abgespeichert wird, ohne dass ein zuvor in dem Arbeitsmodus ermittelter Gewichtswert oder ein zuvor im Arbeitsmodus ermitteltes Gewichtssignal für die Ermittlung des eichfähigen Gewichtswerts verwendet wird.

## Claims

1. Scales having a load receiver (21) which is designed to detect the weight of materials to be weighed, and having an evaluation device (30) which is connected to the load receiver (21) and is designed to determine a weight value on the basis of the weight signal measured by the load receiver (21), and having a storage device (32) which has a tamper-proof memory (32a),
wherein it is provided that the evaluation device (30) can be switched into a calibration mode and a working mode,
**characterised in that**
the evaluation device (30) is designed in such a way that, in the calibration mode, it stores a weight value in the tamper-proof memory (32a) and in the working mode, write access and/or delete access of the evaluation device (30) to the tamper-proof memory (32a) is not possible, and
the evaluation device (30) is designed in such a way that it determines a weight value more quickly and/or at higher resolution in the working mode than in the calibration mode.

2. Scales according to claim 1,
**characterised in that**
the evaluation device (30) displays the weight value on an operating and display device (41), wherein, in the calibration mode, the evaluation device (30) displays the weight value on the operating and display device (41) together with an identifier which identifies the calibration mode, or wherein, in the working mode, the evaluation device (30) displays the weight value on the operating and display device (41) together with an identifier which identifies a non-calibratable weighing.

3. Scales according to claim 1 or 2,
**characterised in that**
the evaluation device (30) is connected to an interface device (33) for issuing weight values or has an interface device (33) for issuing weight values, and the evaluation device (30) controls a printer, preferably a labeller having a label printer (43), in the calibration mode via an output device (33b) of the interface device (33), and/or the evaluation device (30) controls a dosing device, preferably a filling device, in the working mode via an output device (33b) of the interface device (33).

4. Scales according to one of the preceding claims,
**characterised in that**
the tamper-proof memory (32a) is formed as an interchangeable removable memory, preferably as an SD card or a USB stick.

5. Scales according to one of claims 1 to 3,
**characterised in that**
the tamper-proof memory (32a) is formed as a secured memory area in an electronically rewritable memory (32b), and it is preferably provided that the electronically rewritable memory (32b) has at least one additional memory area (32c) in addition to the secured memory area.

6. Scales according to one of the preceding claims,
**characterised in that**
the evaluation device (30) has a statistics module (31) for determining statistical data on the basis of weight values and the statistics module (31) stores the determined statistical data in the tamper-proof memory (32a).

7. Scales according to claim 6,
**characterised in that**
the statistics module (31) is designed in such a way that, when the evaluation device (30) is switched from the calibration mode into the working mode, the statistics module (31) generates a unique statistical identifier and stores this in the tamper-proof memory (32a) together with the statistical data.

8. Scales according to claim 6 or 7,
**characterised in that**
the statistics module (31) is designed in such a way that, when the evaluation device (30) is switched from the working mode into the calibration mode, the statistics module (31) reads out a stored statistical identifier from the tamper-proof memory (32a) and checks for plausibility and only after a positive check adds further statistical data to the statistical data which is already stored in the tamper-proof memory (32a).

9. Scales according to one of the preceding claims,
having a weighing belt (11) which is connected to the load receiver (21) and having a driven feeding belt (10) and preferably having a driven discharge belt (12),
**characterised in that**
a control device (20) is provided which controls the feeding belt (10) and/or the weighing belt (11) and preferably the discharge belt (12) in order to transport materials to be weighed.

10. Scales according to one of the preceding claims,
having an ejection device (13) and/or an identification device,
**characterised in that**,
in the calibration mode, the evaluation device (30) controls the ejection device (13) and/or the identification device (43) to identify and/or eject defective materials to be weighed.

11. Method for operating scales which have a load receiver (21) for detecting the weight of materials to be weighed, wherein the load receiver (21) is connected to an evaluation device (30), by means of which a weight value can be determined on the basis of a weight signal measured by the load receiver (21),
**characterised in that**
the evaluation device (30) for a filling process and/or for a dosing process is switched into a working mode for weight monitoring during the filling process and/or dosing process and, upon completion of the filling process and/or dosing process, is switched into a calibration mode for the detection of a calibratable weight value, wherein the evaluation device (30) is designed in such a way that it determines a weight value more quickly and/or with higher resolution in the working mode than in the calibration mode.

12. Method according to claim 11,
**characterised in that**
the current weight of the materials to be weighed and the target weight of the materials to be weighed and preferably a difference between the current weight and the target weight are displayed on a display device and/or are issued via an interface in the working mode of the evaluation device (30).

13. Method according to claim 11 or 12,
**characterised in that**
new order parameters and/or new order data are entered in the calibration mode of the evaluation device (30) for applying a new weighing order, and new statistics are applied on the basis of these order parameters and/or order data and are stored in a tamper-proof memory (32a), and the evaluation device (30) is then switched into the working mode.

14. Method according to one of claims 11 to 13,
**characterised in that**,
upon completion of a filling process or a dosing process, the evaluation device (30) is switched from the working mode into the calibration mode and a calibratable weight value is determined and stored without a weight value previously determined in the working mode or a weight signal previously determined in the working mode being used to determine the calibratable weight value.

## Revendications

1. Balance avec un capteur de charge (21), qui est conçu pour mesurer le poids d'un article à peser, et avec un dispositif d'analyse (30) relié avec le capteur de charge (21), qui est conçue pour déterminer, à l'aide du signal de poids mesuré par le capteur de charge (21), une valeur de poids et avec un dispositif de mémoire (32) qui comprend une mémoire protégée contre les manipulations (32a),
moyennant quoi, il est prévu que le dispositif d'analyse (30) puisse être commuté dans un mode d'étalonnage et un mode de travail,
**caractérisée en ce que**
le dispositif d'analyse (30) est conçu pour enregistrer dans le mode d'étalonnage une valeur de poids dans la mémoire protégée contre les manipulations (32a) et de façon à ce que, dans le mode de travail, aucun accès en écriture et/ou aucune accès en lecture ne soit possible à partir du dispositif d'analyse (30) à la mémoire protégée contre les manipulations (32a) et
**en ce que** le dispositif d'analyse (30) est conçu à déterminer, dans le mode de travail, une valeur de poids plus rapidement et/ou avec une résolution plus élevée que dans le mode d'étalonnage.

2. Balance selon la revendication 1,
**caractérisée en ce que**
le dispositif d'analyse (30) affiche la valeur de poids sur un dispositif de commande et d'affichage (41), le dispositif d'analyse (30) affichant, en mode étalonnage, la valeur de poids sur le dispositif de commande et d'affichage (41) avec un identifiant caractérisant le mode étalonnage ou le dispositif d'analyse (30) affichant, en mode travail, la valeur de poids sur le dispositif de commande et d'affichage (41) avec un identifiant caractérisant un pesage ne non étalonnable.

3. Balance selon la revendication 1 ou 2,
**caractérisée en ce que**
le dispositif d'analyse (30) est relié à un dispositif d'interface (33) pour la sortie de valeurs de poids ou comprend un dispositif d'interface (33) pour la sortie de valeurs de poids et le dispositif d'analyse (30) commande, en mode étalonnage, par l'intermédiaire d'un dispositif de sortie (33b) du dispositif d'interface (33), une imprimante, de préférence un étiqueteur avec une imprimante à étiquettes (43), et/ou le dispositif d'analyse (30) commande, en mode travail, par l'intermédiaire d'un dispositif de sortie (33b) du dispositif d'interface (33), un dispositif de dosage, de préférence un dispositif de remplissage.

4. Balance selon l'une des revendications précédentes,
**caractérisée en ce que**
la mémoire protégée contre les manipulations (32a) est conçue comme une mémoire amovible interchangeable, de préférence comme une carte SD ou une clé USB.

5. Balance selon l'une des revendications 1 à 3,
**caractérisée en ce que**
la mémoire protégée contre les manipulations (32a) est conçue comme une zone de mémoire sécurisée dans une mémoire électronique réinscriptible (32b) et moyennant quoi il est de préférence prévu que la mémoire électronique réinscriptible (32b) comprenne, en plus de la zone de mémoire sécurisée, au moins une autre zone de mémoire (32c).

6. Balance selon l'une des revendications précédentes,
**caractérisée en ce que**
le dispositif d'analyse (30) comprend un module statistique (31) pour la détermination de données statistiques à l'aide de valeurs de poids et le module statistique (31) enregistre les données statistiques déterminées dans la mémoire protégée contre les manipulations (32a).

7. Balance selon la revendication 6,
**caractérisée en ce que**
le module statistique (31) est conçu de façon à générer, lors de la commutation du dispositif d'analyse (30) du mode étalonnage au mode travail, un identifiant statistique unique et à enregistrer celui-ci dans la mémoire protégée contre les manipulations (32a) en lien avec les données statistiques.

8. Balance selon la revendication 6 ou 7,
**caractérisée en ce que**
le module statistique (31) est conçu de façon à lire, lors de la commutation du dispositif d'analyse (30) du mode étalonnage au mode travail, un identifiant statistique unique dans la mémoire protégée contre les manipulations (32a), à vérifier la plausibilité et, si le contrôle a un résultat positif, à ajouter, aux données statistiques déjà enregistrées dans la mémoire protégée contre les manipulations (32a), des données statistiques supplémentaires.

9. Balance selon l'une des revendications précédentes,
avec une bande de pesage (11) reliée avec le capteur de charge (21) et avec une bande d'alimentation (10) entraînée et de préférence avec une bande de sortie (12) entraînée (12),
**caractérisée en ce que**
un dispositif de commande (20) est prévu, qui commande la bande d'alimentation (10) et/ou la bande de pesage (11) et de préférence la bande de sortie (12), pour transporter l'article à peser.

10. Balance selon l'une des revendications précédentes,
avec un dispositif d'évacuation (13) et/ou un dispositif d'identification,
**caractérisée en ce que**
le dispositif d'analyse (30) commande, en mode étalonnage, le dispositif d'évacuation (13) et/ou le dispositif d'identification (43), afin d'identifier et/ou d'évacuer un article pesé défectueux.

11. Procédé d'exploitation d'une balance, qui comprend un capteur de charge (21) pour la mesure du poids d'un article à peser, le capteur de charge (21) étant relié avec un dispositif d'analyse (30), au moyen duquel une valeur de poids est déterminée à l'aide d'un signal de poids mesuré par le capteur de charge (21),
**caractérisé en ce que**
le dispositif d'analyse (30) est commuté pour un processus de remplissage et/ou pour un processus de dosage dans un mode de travail pour le contrôle du poids pendant le processus de remplissage et/ou le processus de dosage et, à la fin du processus de remplissage et/ou du processus de dosage, on passe en mode étalonnage pour la détermination d'une valeur de poids étalonnable, le dispositif d'analyse (30) étant conçu de façon à déterminer, en mode travail, une valeur de poids plus rapidement et/ou avec une résolution plus élevée qu'en mode étalonnage.

12. Procédé selon la revendication 11,
**caractérisé en ce que**
en mode travail du dispositif d'analyse (30), le poids actuel de l'article à peser et le poids cible de l'article à peser et de préférence une différence entre le poids actuel et le poids cible sont affichés sur un dispositif d'affichage et/ou sortis par l'intermédiaire d'une interface.

13. Procédé selon la revendication 11 ou 12,
**caractérisé en ce que**
de nouveaux paramètres de tâche et/ou de nouvelles données de tâche sont créés dans le mode d'étalonnage du dispositif d'analyse (30) pour l'enregistrement d'une nouvelle tâche de pesage et, à l'aide de ces paramètres de tâches et/ou de ces données de tâches, une nouvelle statistique est créée et enregistrée dans une mémoire protégée contre les manipulations (32a) puis le dispositif d'analyse (30) est passé en mode travail.

14. Procédé selon l'une des revendications 11 à 13,
**caractérisé en ce que**
à la fin d'un processus de remplissage ou d'un processus de dosage, le dispositif d'analyse (30) est passé du mode travail au mode étalonnage et une valeur de poids étalonnable est déterminée et enregistrée, sans qu'une valeur de poids déterminée auparavant en mode travail ou qu'un signal de poids déterminé auparavant en mode travail soit utilisé pour la détermination de la valeur de poids étalonnable.
